# EUROPÄISCHE PATENTSCHRIFT

(11) **EP 1 182 393 B1**
(45) Veröffentlichungstag und Bekanntmachung des Hinweises auf die Patenterteilung: **22.12.2004**
(21) Anmeldenummer: 01104854.3
(22) Anmeldetag: 28.02.2001
(51) Int. Cl.: F16L 47/00

(54) **Lösbare Rohrverbindungsanordnung**
Detachable pipe connection
Raccord de tuyaux démontable

(30) Priorität: 24.08.2000 DE 10041556
(43) Veröffentlichungstag der Anmeldung: 27.02.2002
(73) Patentinhaber: Georg Fischer Rohrleitungssysteme AG, 8201 Schaffhausen (CH)
(72) Erfinder: Grün, Harald, 78244 Gottmadingen (DE)
(74) Vertreter: Weiss, Wolfgang, Dr.

(56) Entgegenhaltungen:
- EP-A- 0 396 151
- FR-A- 1 481 812
- US-A- 5 837 180

## Beschreibung

Die Erfindung bezieht sich auf eine lösbare Rohrverbindungsanordnung zur Verbindung von Rohrleitungen aus Kunststoff, umfassend zwei flanschartig ausgebildete und zueinander passende Endbereichen der Rohrleitung, mindestens eine zum Rohrleitungsendbereich passende Manschette und eine Klammer zur lösbaren Befestigung der Rohrleitungsendbereichen und der Manschette.

In der industriellen Verfahrenstechnik, insbesondere in der Nahrungsmittelherstellung und in der pharmazeutischen Industrie werden Rohrleitungen verwendet um hochreine Medien zu fördern. An das Rohrleitungsmaterial werden hohe Anforderungen gestellt. Die Rohrleitungen müssen kostengünstig und einfach herzustellen sein, die Rohrleitungen müssen zur Reinigung in Einzelteilen so weit als möglich zerlegt werden können, das Material muss leicht zu reinigen sein, es muss mehrmals die Temperatur der Sterilisation aushalten und die Rohrleitungen dürfen keine Bereiche aufweisen, in die die Strömungsgeschwindigkeit des Mediums gering oder gleich null ist, das heisst die Rohrleitungen dürfen keine Toträume aufweisen.

Wenn zwei Rohrleitungsteile miteinander verbunden werden, müssen die Übergänge zwischen den einzelnen Rohrleitungsteilen möglichst gleichbleibend ausgebildet werden, das heisst ohne Änderung des Durchmessers, ohne Nahtstellen und ohne Änderung des Materials an der Dichtungsstelle ausgebildet werden. Zur Wahl stehen Rohrleitungen aus rostfreiem Stahl oder aus Kunststoff. Leitungen aus Kunststoff haben gegenüber Leitungen aus Stahl die Vorteile des Gewichtes und des Preises. Bisher wurden Rohrleitungen aus günstigeren Kunststoffen verwendet, die nicht sterilisierbar sind und nach jedem Gebrauch weggeworfen werden mussten. Hochwertigere Kunststoffe, wie beispielsweise PVDF (Polyvinylidenfluorid), werden im Flanschbereich mit Manschetten aus rostfreiem Stahl verstärkt um die auftretenden hohen mechanischen Spannungen aufzufangen. Insgesamt sollte aber der Flanschbereich so ausgeführt werden können, dass eine Kompatibilität mit den bestehenden und standardisierten Flanschen und Klammern gewährleistet ist.

Aus der EP 958 469 A2 ist eine Rohrverbindungsanordnung bekannt, wobei der Rohrleitungsendbereich aus einem ersten polymeren Werkstoff in einem Kunststoffspritzgussverfahren hergestellt und nach dem Spritzen einem hohen Druck und einer derart hohen Temperatur ausgesetzt wird dass der Flanschbereich schrumpft. Anschliessend wird der Flanschbereich nochmals mit einem Verstärkungsteil aus einem zweiten polymeren Werkstoff überextrudiert, der eine höhere Festigkeit als der erste Werkstoff aufweist. Durch die Überextrusion und durch die Temperaturbehandlung wird eine nicht lösbare Verbindung zwischen dem Rohrleitungsendbereich und dem Verstärkungsteil hergestellt.

Aus der EP 396151 A2 ist ein Verfahren zur Herstellung einer Rohrflanschverbindung bekannt. Die Endbereichen der Rohre weisen senkrecht zum Rohrmantel verlaufenden Aussenbunde auf. Im montierten Zustand liegen Metallringe gegen die Aussenbunde an. Die Metallringe werden von Spannelemente zusammengepresst. Die Rohrendbereichen werden gemäss dem Herstellungsverfahren verformt. Zur Vergrösserung der Dichtflächen der ineinandergreifenden Aussenbunde wird in die Dichtflächen eine Nut beziehungsweise eine Feder ausgebildet. Das Rohrmaterial selbst wird als Dichtungsmaterial genutzt.

Die Erfindung wird von den Merkmalen des Anspruchs 1 definiert.

Bevorzugte Weiterbildungen der Erfindung ergeben sich aus den abhängigen Ansprüchen.

Es ist weiter von Vorteil, dass die Rohrverbindungsanordnung mehrmals sterilisiert werden kann und dass bei der Herstellung der Manschette möglichst wenig Abfall produziert wird. Dies wird dadurch erreicht, dass die Manschette in einem einstufigen Zieh- oder Biegeverfahren aus rostfreiem Stahl herstellbar ist.

Es ist weiter von Vorteil, dass die lösbare Rohrverbindungsanordnung mit den bestehenden und standardisierten Flanschen und Klammem zur lösbaren Befestigung der Rohrleitungsendbereichen, der Dichtung und der Manschette kompatibel ist. Dies wird dadurch erreicht, dass die Manschette einen Aussendurchmesser aufweist, der im wesentlichen gleich dem Aussendurchmesser des Rohrleitungsendbereiches ist. Dies wird auch dadurch erreicht, dass die Manschette einen Aussendurchmesser aufweist, der im Wesentlichen kleiner oder gleich der Summe von dem Aussendurchmesser des Endbereiches und der Wandstärke der Rohrleitung ist.

Es ist auch von Vorteil, dass die lösbare Rohrleitungsverbindung mit einem einfach ausgebildeten Einzelteil eine gute Verstärkung und eine hohe Druckfestigkeit im Flanschbereich erhält. Dies wird dadurch erreicht, dass die Manschette einstückig und rotationssymmetrisch aus rostfreiem Stahl ausgebildet ist und einen Kragenbereich und einen an dem Kragenbereich anschliessenden Flanschbereich aufweist, wobei der Kragenbereich einen Innendurchmesser in Übereinstimmung mit dem Rohrleitungsaussendurchmesser aufweist und wobei der Flanschbereich vom Kragenbereich derart abgewinkelt angeordnet ist, dass die Innenseite des Flanschbereiches formgleich mit dem flanschsartigen Rohrleitungsendbereich angeordnet ist.

Ein Ausführungsbeispiel der Erfindung wird anhand der Figuren beschrieben. Es zeigen:
Figur 1 einen Schnitt durch eine erfindungsgemässe Rohrverbindungsanordnung,
Figur 2 einen Schnitt durch einen Teil der Rohrverbindungsanordnung von Figur 1 vor dem Zusammenbau,
Figur 3 eine bereichsweise Vergrösserung von Figur 1,
Figur 4 eine bereichsweise Vergrösserung eines zweiten Ausführungsbeispiels und
Figur 5 eine bereichsweise Vergrösserung eines dritten Ausführungsbeispiels.

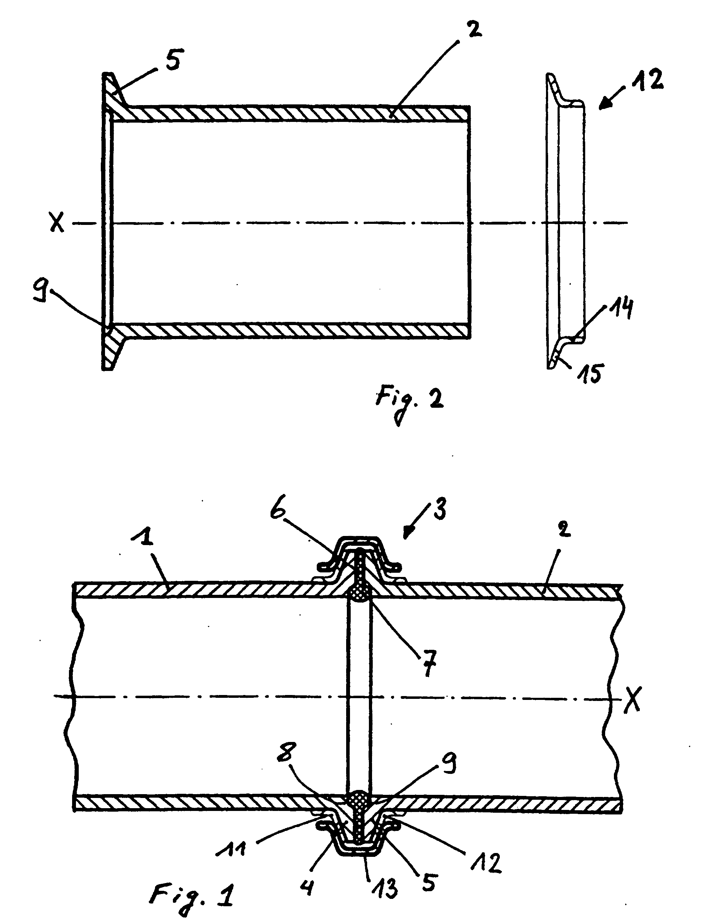

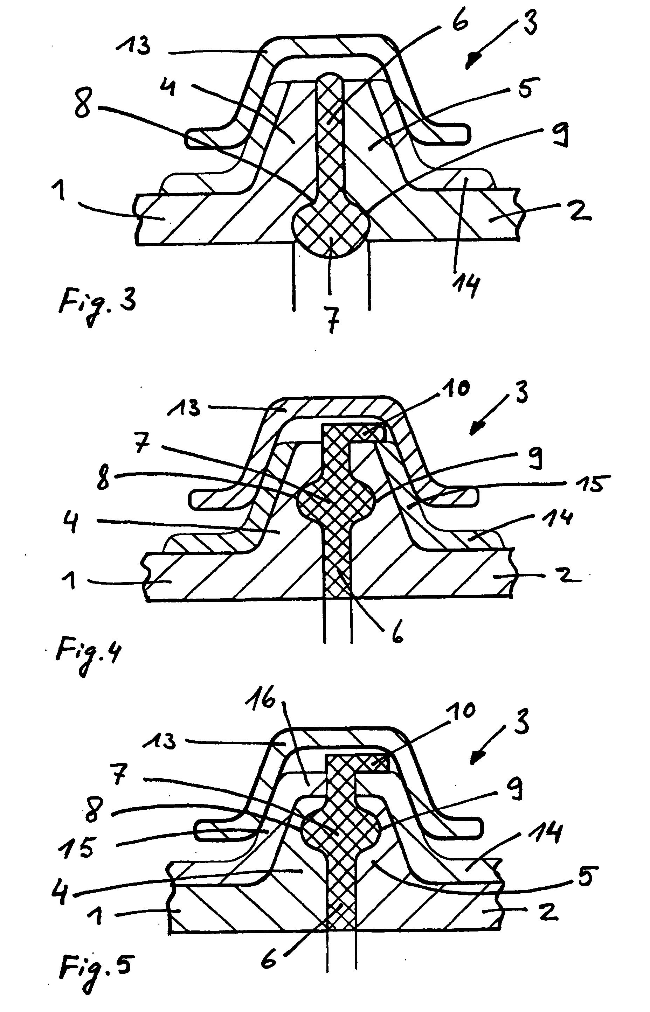

In Figur 1 sind schematisch zwei Rohrleitungen 1, 2, die beispielsweise aus PVDF (Polyvinylidenfluoride) oder aus einem anderen hochwertigen Kunststoffmaterial hergestellt sind, und die beispielsweise in der Nahrungsmittelherstellung und in der pharmazeutischen Industrie verwendet werden, geschnitten entlang der Rohrleitungsachse X dargestellt. In Figur 1 ist eine lösbare Rohrverbindungsanordnung 3 zur lösbaren Verbindung der Rohrleitungen 1, 2 dargestellt. Die lösbare Rohrverbindungsanordnung 3 ist rotationssymmetrisch ausgebildet. Die Rohrleitungen 1, 2 weisen beide zueinander passende Endbereichen 4, 5 aus Kunststoff auf, die wie Flansche 4, 5 ausgebildet sind. Zwischen den Rohrleitungsendbereichen 4, 5 ist eine Dichtung 6 angeordnet. Die Dichtung 6 ist aus einem flexiblen Material, beispielsweise Elastomer oder Gummi, hergestellt. Die flexible Dichtung 6 hat in der Richtung der Rohrleitungsachse X Stirnflächen, die im Wesentlichen formgleich mit den Stirnflächen der Rohrleitungsendbereichen 4, 5 ausgebildet sind. Hiermit wird eine gute Anpassung der Dichtung 6 zwischen den Rohrleitungen 1, 2 erreicht. Die Dichtung 6 kann auch einen ringförmig ausgebildeten Wulst 7 aufweisen, der im Wesentlichen eine Nut 8,9 im Endbereich 4,5 der Rohrleitung 1, 2 ausfüllt. Die Dichtung 6 kann auch eine am äusseren Rand der Dichtung anschliessende umlaufende Lippe 10 aufweisen, die in den Ausführungsbeispielen von Figuren 4 und 5 beschrieben wird.

Passend zu den Endbereichen 4, 5 ist jeweils eine Manschette 11, 12 dargestellt. Die lösbare Rohrverbindungsanordnung 3 wird von einer Klammer 13 zusammengehalten, die die Endbereiche 4, 5 der Rohrleitungen 1, 2, die Dichtung 6 und die Manschetten 11, 12 klemmend umgibt. Die Klammer 13 ist eine bestehende und standardisierte Klammer, die beispielsweise in den Normen ISO 2852, DIN 32676 oder BS 4825 Part 3 beschrieben ist. Mit der Klammer 13 wird auf die lösbare Rohrverbindung 3 eine Spannung ausgeübt, die gross genug ist, um die Rohrleitungen 1,2 dichtend und totraumfrei, das heisst ohne Bereiche, in die die Strömungsgeschwindigkeit des Mediums in der Rohrleitung gering oder gleich null ist, zusammen zu halten. Die Manschetten 11, 12 sind aus rostfreiem Stahl hergestellt. Die Form der rotationssymmetrischen Manschetten 11, 12 ist einfach und kann in einem einzelnen Durchgang auf eine Biege- oder Pressvorrichtung hergestellt werden.

In Figur 2 ist eine Rohrleitung 2 und eine Manschette 12 aus Figur 1 geschnitten vor dem Zusammenbau dargestellt. In Figur 2 ist ersichtlich, wie die Manschette 12 verschiebbar über den Aussendurchmesser der Rohrleitung 2 angebracht werden kann. Die Manschette 12 weist einen Kragenbereich 14 auf, der einen Innendurchmesser aufweist, der im Wesentlichen mit dem Aussendurchmesser der Rohrleitung 2 übereinstimmt. Hierdurch wird erreicht, dass die Manschette 12 gerade noch über die Rohrleitung 2 geschoben werden kann. Hierdurch wird einen guten Sitz des Kragenbereichs 14 auf die Aussenseite der Rohrleitung 2 gewährleistet. Anschliessend an den Kragenbereich 14 weist die Manschette 12 einen Flanschbereich 15 auf, der vom Kragenbereich 14 durch Pressen oder Biegen abgewinkelt ausgebildet ist. Durch die abgewinkelte Form kann die Innenseite des Flanschbereiches 15 formgleich mit dem flanschsartigen Rohrleitungsendbereich 5 angeordnet werden. Hierdurch wird ebenfalls einen guten Sitz der Manschette 12 über den Endbereich 5 der Rohrleitung 2 gewährleistet. Aus Figur 1 und Figur 2 ist ersichtlich, wie die Manschette 12 einen Aussendurchmesser aufweist, der im Wesentlichen gleich gross ist, wie der Aussendurchmesser des flanschartigen Endbereichen 5 der Rohrleitung 2. Hierdurch wird erreicht, dass die Manschette 12 leicht in die Klammer 13 aufgenommen werden kann und dass die Klammer 13 im angespannten Zustand nur Kräfte mit einem Kräftevektor in axialer Richtung auf die Endbereiche 4, 5 und auf die Dichtung 6 überträgt.

In den Figuren 3, 4 und 5 sind nacheinander drei Ausführungsbeispielen der lösbaren Rohrverbindungsanordnung dargestellt. Figur 3 stellt eine Vergrösserung eines Ausschnittes aus Figur 2 dar. In den Figuren 4 und 5 weist die Dichtung 6 eine umlaufende Lippe 10 auf. Hiermit wird eine einfachere Zentrierung der Dichtung 6 auf einem Endbereich 5 der Rohrleitung 2 ermöglicht. Der Zusammenbau der lösbaren Rohrverbindung wird durch die Lippe 10, die ringförmig passend um die Flanschbereiche 5 der Rohrleitung 2 oder um die Flanschbereiche 15 der Manschette 12 gelegt werden kann, wesentlich erleichtert.

In Figur 5 ist ein drittes Ausführungsbeispiel der lösbaren Verbindungsanordnung 3 dargestellt. Hier weist die Manschette 11, 12 einen Aussendurchmesser auf, der im Wesentlichen nicht grösser ist, wie die Summe des Aussendurchmessers des Endbereiches 4, 5 und der Wandstärke der Manschette 11, 12. Die Manschette 11, 12 von Figur 5 weist anschliessend am Flanschbereich 15 noch eine umlaufende Lippe 16 auf. Die Lippe 16 hat im Wesentlichen die gleiche Wandstärke wie der Kragenbereich 14 der Manschette 11,12. Auch diese Ausführung der Manschette 11, 12 ist verschiebbar in Bezug auf dem Endbereich 4, 5 der Rohrleitung 1, 2 und gewährleistet eine Kompatibilität mit bestehenden Klammern 13. Die Lippe 16 erleichtert der Zusammenbau der lösbaren Rohrverbindungsanordnung 3 und wird vor allem verwendet bei Rohrleitungen 1, 2, die einen kleineren Aussendurchmesser im Endbereich 4,5 aufweisen.

In den Figuren 3 bis 5 sind unterschiedlich ausgeführten flanschartigen Endbereichen 4,5 dargestellt. Die Aussendurchmesser der Kunststoffflanschen 4,5 sind unterschiedlich und die Nuten 8,9 zur Aufnahme der Wulst 7 sind auf einer unterschiedlichen radialen Distanz von der Rohrleitungsachse X angeordnet.

Die flanschartigen Endbereiche 4, 5 der Rohrleitungen 1, 2 mussten in den bisherigen lösbaren Rohrverbindungen 3 von Kunststoffrohrleitungen wegen den auftretenden hohen mechanischen Spannungen immer besonders verstärkt ausgebildet werden. Die Flanschbereiche mussten mit einer grösseren Dicke in axialer Richtung ausgeführt werden. Zu dicke Flanschbereiche 4, 5 passen nicht in den standardisierten Klammern 13. Bisher mussten deshalb besonders angefertigte, nicht kompatible Klammern verwendet werden, die erschwert zu montieren sind und scharfe Kanten aufweisen. Durch die Verwendung der erfindungsgemässen Manschette 11, 12 aus rostfreiem Stahl in der lösbaren Rohrverbindung 3 wird erreicht, dass die Flanschbereiche 4,5 nicht besonders dick ausgebildet werden müssen und dass eine bestehende und standardisierte Klammer verwendet werden kann. Ohne weiteren Änderungen an die Konstruktion oder an die Dimensionen kann eine ausreichend hohe Dichtwirkung bei einer lösbaren Rohrverbindung von Kunststoffrohrleitungen gewährleistet werden.

## Patentansprüche

1. Lösbare Rohrverbindungsanordnung (3) zur Verbindung von Rohrleitungen (1,2) aus Kunststoff, umfassend zwei flanschartig ausgebildete und zueinander passende Endbereichen (4,5) der Rohrleitung, mindestens eine zum Rohrleitungsendbereich (4,5) passende Manschette (11,12) und eine Klammer (13) zur lösbaren Befestigung der Rohrleitungsendbereichen (4,5) und der Manschette (11,12), wobei die Manschette (11,12) aus rostfreiem Stahl ausgebildet ist, wobei die Manschette (11,12) verschiebbar an dem flanschartigen Endbereich (4,5) angeordnet ist und wobei zwischen den Rohrleitungsendbereichen (4,5) eine flexible Dichtung (6) angeordnet ist, wobei die Manschette (11,12) einstückig aus einem Kragenbereich (14) und einem Flanschbereich (15) ausgebildet ist, wobei der Flanschbereich (15) unter einem Winkel von weniger als 90° abgewinkelt zum Kragenbereich (14) verlaufend angeordnet ist und wobei der Flanschbereich (15) am freien Ende und am Übergang zum Kragenbereich (14) abgerundete Kanten aufweist.

2. Lösbare Rohrverbindungsanordnung (3) zur Verbindung von Rohrleitungen nach dem Anspruch 1, **dadurch gekennzeichnet, dass** die Manschette (11,12) einen Aussendurchmesser aufweist, der im Wesentlichen gleich dem Aussendurchmesser des Endbereiches (4,5) ist.

3. Lösbare Rohrverbindungsanordnung (3) zur Verbindung von Rohrleitungen nach dem Anspruch 1, **dadurch gekennzeichnet, dass** die Manschette (11,12) einen Aussendurchmesser aufweist, der im Wesentlichen kleiner oder gleich der Summe von dem Aussendurchmesser des Endbereiches (4,5) und der Wandstärke der Manschette (11,12) ist.

4. Lösbare Rohrverbindungsanordnung (3) zur Verbindung von Rohrleitungen nach einem der Ansprüche 1 bis 3, **dadurch gekennzeichnet, dass** die Manschette (11,12) in einem einstufigen Zieh- und Biegeverfahren aus rostfreiem Stahl herstellbar ist.

5. Lösbare Rohrverbindungsanordnung (3) zur Verbindung von Rohrleitungen aus Kunststoff nach einem der Ansprüche 1 bis 4, **dadurch gekennzeichnet, dass** die Manschette (11,12) einstückig und rotationssymmetrisch aus rostfreiem Stahl ausgebildet ist und einen Kragenbereich (14) und einen an dem Kragenbereich anschliessenden Flanschbereich (15) aufweist, wobei der Kragenbereich einen Innendurchmesser in Übereinstimmung mit dem Rohrleitungsaussendurchmesser aufweist und wobei der Flanschbereich vom Kragenbereich derart abgewinkelt angeordnet ist, dass die Innenseite des Flanschbereiches (15) formgleich mit dem flanschsartigen Rohrleitungsendbereich (4,5) angeordnet ist.

## Claims

1. Detachable pipe connection (3) for connecting plastic pipelines (1, 2), comprising two end regions (4, 5) of the pipeline which are of flange-like design and match one another, at least one sleeve (11, 12) matching the pipeline end region (4, 5), and a clamp (13) for the detachable fastening of the pipeline end regions (4, 5) and the sleeve (11, 12), the sleeve (11, 12) being formed from stainless steel, the sleeve (11, 12) being displaceably arranged on the flange-like end region (4, 5), and a flexible seal (6) being arranged between the pipeline end regions (4, 5), the sleeve (11, 12) being formed in one piece from a collar region (14) and a flange region (15), the flange region (15) being arranged so as to run bent at an angle of less than 90° to the collar region (14), and the flange region (15) having rounded-off edges at the free end and at the transition to the collar region (14).

2. Detachable pipe connection (3) for connecting pipelines according to Claim 1, **characterized in that** the sleeve (11, 12) has an outside diameter which is essentially equal to the outside diameter of the end region (4, 5).

3. Detachable pipe connection (3) for connecting pipelines according to Claim 1, **characterized in that** the sleeve (11, 12) has an outside diameter which is essentially less than or equal to the sum of the outside diameter of the end region (4, 5) and the wall thickness of the sleeve (11, 12).

4. Detachable pipe connection (3) for connecting pipelines according to Claims 1 to 3, **characterized in that** the sleeve (11, 12) can be produced from stainless steel in a single-stage drawing and bending process.

5. Detachable pipe connection (3) for connecting pipelines according to one of Claims 1 to 4, **characterized in that** the sleeve (11, 12) is formed in one piece from stainless steel and in a rotationally symmetrical manner and has a collar region (14) and a flange region (15) adjoining the collar region, the collar region having an inside diameter in conformity with the pipeline outside diameter, and the flange region being arranged so as to be bent at an angle from the collar region in such a way that the inside of the flange region (15) is arranged with a shape identical to the flange-like pipeline end region (4, 5).

## Revendications

1. Agencement de raccord de tuyau démontable (3) pour le raccordement de conduites tubulaires (1, 2) en plastique, comprenant deux zones d'extrémité (4, 5) de conduite tubulaire réalisées en forme de brides et adaptées l'une à l'autre, au moins une manchette (11, 12) adaptée à la région d'extrémité (4, 5) de la conduite tubulaire et une pince (13) pour la fixation démontable des zones d'extrémité (4, 5) de la conduite tubulaire et de la manchette (11, 12), la manchette (11, 12) étant réalisée en acier inoxydable, la manchette (11, 12) étant disposée de manière à pouvoir coulisser sur la zone d'extrémité (4, 5) en forme de bride et un joint d'étanchéité flexible (6) étant disposé entre les zones d'extrémités (4, 5) de la conduite tubulaire, la manchette (11, 12) étant réalisée d'une seule pièce à partir d'une zone de col (14) et d'une zone de bride (15), la zone de bride (15) étant disposée en s'étendant de manière coudée d'un angle inférieur à 90° par rapport à la zone de col (14) et la zone de bride (15) présentant à l'extrémité libre et au niveau de la transition à la zone de col (14) des arêtes arrondies.

2. Agencement de raccord de tuyau démontable (3) pour le raccordement de conduites tubulaires selon la revendication 1, **caractérisé en ce que** la manchette (11, 12) présente un diamètre extérieur qui est essentiellement égal au diamètre extérieur de la zone d'extrémité (4, 5).

3. Agencement de raccord de tuyau démontable (3) pour le raccordement de conduites tubulaires selon la revendication 1, **caractérisé en ce que** la manchette (11, 12) présente un diamètre extérieur qui est essentiellement inférieur ou égal à la somme du diamètre extérieur de la zone d'extrémité (4, 5) et de l'épaisseur de paroi de la manchette (11, 12).

4. Agencement de raccord de tuyau démontable (3) pour le raccordement de conduites tubulaires selon l'une quelconque des revendications 1 à 3, **caractérisé en ce que** la manchette (11, 12) peut être fabriquée en acier inoxydable en un procédé d'étirage et de cintrage en une seule étape.

5. Agencement de raccord de tuyau démontable (3) pour le raccordement de conduites tubulaires en plastique selon l'une quelconque des revendications 1 à 4, **caractérisé en ce que** la manchette (11, 12) est réalisée en acier inoxydable d'une seule pièce et à symétrie de révolution et présente une zone de col (14) et une zone de bride (15) se raccordant à la zone de col, la zone de col présentant un diamètre intérieur coïncidant avec le diamètre extérieur de la conduite tubulaire et la zone de bride étant disposée de manière coudée par rapport à la zone de col de telle sorte que le côté intérieur de la zone de bride (15) soit disposé avec équivalence de forme avec la zone d'extrémité (4, 5) de la conduite tubulaire en forme de bride.
